(19) Europäisches Patentamt
European Patent Office
Office européen des brevets

(11) **EP 2 243 678 B1**

(12) **FASCICULE DE BREVET EUROPEEN**

(45) Date de publication et mention
de la délivrance du brevet:
**19.09.2012 Bulletin 2012/38**

(51) Int Cl.:
**B61D 19/02** *(2006.01)*   **B60J 10/00** *(2006.01)*
**E05F 15/00** *(2006.01)*

(21) Numéro de dépôt: **10004169.8**

(22) Date de dépôt: **20.04.2010**

(54) **Ensemble de joints pour une porte**

Dichtungssatz für eine Tür

Assembly of door gaskets

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **21.04.2009 FR 0901924**

(43) Date de publication de la demande:
**27.10.2010 Bulletin 2010/43**

(73) Titulaire: **Faiveley Transport**
**93200 Saint Denis (FR)**

(72) Inventeurs:
• **Courrian, Cédric**
**37530 Nazelles-Négron (FR)**

• **Orlandini, Benoît**
**37100 Tours (FR)**

(74) Mandataire: **Broydé, Marc**
**Novagraaf Technologies**
**122, rue Edouard Vaillant**
**92593 Levallois-Perret Cedex (FR)**

(56) Documents cités:
**EP-A2- 1 452 360     WO-A1-2006/087131**
**CH-A5- 688 354      DE-U1-202004 006 968**
**US-A1- 2004 140 186**

## Description

### DOMAINE TECHNIQUE DE L'INVENTION

L'invention concerne un ensemble de joints pour une porte à au moins un battant, ainsi qu'une porte pourvue d'un tel ensemble de joints.

Le document WO 2006/087131 décrit un ensemble de joints conforme au préambule de la revendication 1.

### ETAT DE LA TECHNIQUE ANTERIEURE

Les véhicules de transport en commun, par exemple les véhicules ferroviaires, et en particulier les trains de banlieue ou les métros, sont pourvus de portes à deux battants qui coulissent ou louvoient l'un en direction de l'autre pour se refermer.

Lors de la fermeture des portes, un objet peut se retrouver bloqué entre les joints de la porte et un usager peut se retrouver prisonnier des portes par le biais de cet objet.

Pour interdire le départ du véhicule, déclencher une alarme et/ou provoquer la réouverture automatique des portes, les joints de porte sont équipés de détecteurs de présence qui changent d'état lorsqu'un objet est coincé entre les joints de portes. Cependant, certains cas de coincement d'objets sont difficiles à détecter avec les systèmes traditionnels, notamment lorsque se trouvent coincés entre les battants des objets souples et minces de type laisse, cravate ou écharpe. Or, il arrive fréquemment que des objets minces de ce type se retrouvent coincés entre les joints des deux battants de porte. L'utilisateur peut alors se retrouver prisonnier de la porte par le biais de cet objet souple et mince. C'est lors du contrôle visuel de la fermeture des portes par le conducteur du train ou le chef de gare que ce type d'incident est détecté, mais une détection automatique reste souhaitable.

Pour pallier ce genre de problème, la plupart des portes de trains ou de métros sont équipés de joint anti-entraînement d'usager. Ces joints comportent des détecteurs permettant de détecter la présence d'un objet, même si celui-ci est mince, entre les joints de la porte. Un tel joint anti-entraînement d'usager est par exemple décrit dans le document CH 688 354.

Cependant, un tel joint nécessite l'utilisation de deux capteurs et il ne permet pas une détection à 180° des objets. En outre, il ne détecte les objets que si une tension suffisamment forte est exercée sur eux. La fiabilité n'est donc pas optimale. Si l'on veut augmenter la sensibilité du dispositif, on risque par ailleurs de faire de fausses détections, ce qui nuit à la disponibilité du système.

### EXPOSE DE L'INVENTION

L'invention vise à remédier aux inconvénients de l'état de la technique en proposant un ensemble de joints de porte simple et fiable permettant la prévention d'entraînement de passager lorsque les portes sont fermées et qu'un objet souple mince de type cravate, veste ou laisse se retrouve coincé entre les joints de la porte.

Plus précisément, l'invention concerne un ensemble de joints selon la revendication 1.

Lorsque l'ensemble de joints selon l'invention est en position fermée, ou en position fermée nominale, l'espace entre le joint mâle et le joint femelle forme une double chicane : en effet, l'espace au niveau de la cavité du joint femelle et du capteur de pression présente une concavité tournée vers le joint mâle, tandis que les espaces formés au niveau des branches de la partie femelle présentent chacune une concavité tournée vers le joint femelle. Cette double chicane présente deux points d'inflexion de part et d'autre du capteur de pression :

- le premier point d'inflexion se trouve entre le fond de la cavité et l'extrémité libre intérieure d'une première des deux branches,

- et le second point d'inflexion se trouve entre le fond de la concavité et l'extrémité libre intérieure de l'autre branche.

Lorsqu'un objet mince est coincé entre le joint mâle et le joint femelle, cet objet mince passe par la chicane et subit un double changement d'angle, de sorte que la partie de l'objet mince coincé au niveau du capteur de pression exerce sur lui une contrainte parallèle à l'axe de translation. Avec un seul capteur de pression parallèle à l'axe de translation, l'ensemble de joints selon l'invention peut donc détecter tout objet souple mince, quelle que soit la direction de la contrainte qui est exercée sur lui. En effet, lorsqu'une contrainte est exercée sur un objet souple mince, peu importe la direction de cette contrainte, celle-ci est transformée en contrainte parallèle à l'axe de translation par la double chicane. Toute tension exercée sur l'objet souple mince comporte une composante transverse et une composante parallèle à l'axe de translation. La composante parallèle à l'axe de translation n'est pas transformée par la chicane. Quant à la composante transverse, elle est transformée en composante parallèle à l'axe de translation par la chicane. On crée ainsi un trajet pour l'objet mince entre le joint mâle et le joint femelle de façon à ce que son déplacement transversal soit capté par un capteur de pression parallèle à l'axe de translation.

L'ensemble de joints de porte selon l'invention ne nécessite donc l'utilisation que d'un seul capteur et détecte les objets coincés quelle que soit la direction de la tension exercée sur eux, d'où une économie de moyens. Préférentiellement, le joint femelle est donc dépourvu de capteur, bien qu'il soit envisageable en théorie de prévoir un deuxième capteur intégré au joint femelle, pour assurer une redondance par exemple.

Par ailleurs, l'espace entre le joint mâle et le joint femelle est fermé de sorte que l'ensemble de joints assure également les fonctions primaires d'étanchéité à l'eau, la poussière ou au vent.

Le capteur de pression ne doit pas être en contact avec les parois de la cavité de façon à ce que les parois de la cavité n'exercent pas de pression sur le capteur et qu'il n'y ait pas de déclenchement intempestif du capteur de pression alors qu'il n'y a pas d'objet mince coincé entre le joint mâle et le joint femelle. Le capteur de pression est suffisamment éloigné des parois de la cavité pour éviter que les parois de la cavité appuient sur le capteur, même en cas de défaut d'ajustement.

Afin d'optimiser la transformation d'une tension transverse sur l'objet mince en contrainte parallèle à l'axe de translation sur le capteur de pression, et ce même lorsqu'il y a des défauts d'ajustement, il est préférable que le capteur de pression pénètre profondément dans la cavité.

Le joint mâle et le joint femelle sont de préférence réalisés dans un matériau élastique du type caoutchouc.

Les branches du joint femelle sont de préférence suffisamment rigides pour ne pas se déformer lorsqu'un objet mince de type cravate exerce une contrainte sur elles. De cette façon, l'objet mince prend appui sur les branches pour exercer une contrainte parallèle à l'axe de translation sur le capteur de pression.

La surface du capteur de pression est de préférence déformable pour se déformer en compression lorsqu'un objet mince exerce une contrainte sur le capteur de pression.

Ainsi lorsqu'un objet mince est coincé dans l'espace entre le joint mâle et le joint femelle, les branches du joint femelle se déforment très peu, tandis que la surface du capteur de pression se déforme en compression.

La cavité de la partie femelle est conformée pour délimiter, avec la surface d'appui et le capteur de pression, un espace vide présentant une section en forme de Ω.

Les branches de la partie femelle viennent délimiter les pieds du Ω, tandis que les parois de la cavité délimitent la tête du Ω. Cette forme en Ω dans l'espace entre le joint mâle et le joint femelle contraint l'objet mince à passer par un chemin comportant deux points d'inflexion très marqués, ce qui permet à l'objet mince d'appuyer sur le capteur de pression, suivant l'axe de translation lorsqu'une tension est exercée sur l'objet mince.

Avantageusement, le capteur de pression comporte une extrémité pourvue d'une nervure faisant saillie de la paroi du capteur de pression en direction de la cavité du joint femelle.

La nervure, sur l'extrémité du capteur de pression, permet de localiser la pression générée par l'objet mince sur un point précis du capteur de pression au lieu de la répartir sur toute la surface du capteur de pression.

Avantageusement, la nervure comporte une extrémité plane.

La nervure a de préférence une section de forme rectangulaire.

Avantageusement, le fond du joint femelle est plan et il est disposé face à l'extrémité plane de la nervure lorsque l'ensemble de joints est en position fermée nominale.

L'ensemble de joints comporte de préférence un axe transversal perpendiculaire à l'axe de translation, le fond plan présentant des dimensions suivant l'axe transversal supérieures à celles de l'extrémité plane de la nervure.

De cette façon, l'ensemble de joints selon l'invention peut détecter un objet coincé entre le joint mâle et le joint femelle, même lorsqu'il y a un défaut d'ajustement suivant l'axe transversal.

Plus généralement, il est avantageux que le fond plan ait une forme complémentaire de l'extrémité de la nervure qui lui fait face de façon à permettre une détection même en cas de défaut d'ajustement.

Avantageusement, le fond plan présente des dimensions suivant l'axe transversal au moins deux fois supérieures à celles de l'extrémité plane de la nervure.

Avantageusement, la cavité et le capteur de pression sont dimensionnés de façon à ce que, lorsque l'ensemble de joints est en position fermée nominale, l'extrémité de la nervure se trouve à une distance d1 du fond de la cavité telle que:

$$0,5 < d1 < 3mm$$

Avantageusement, l'ensemble de joints est tel que le capteur de pression comporte deux parois latérales, chaque paroi latérale faisant face à une paroi intérieure d'une des branches du joint femelle, la cavité et le capteur de pression étant dimensionnées de façon à ce que, lorsque l'ensemble de joints est en position fermée nominale, la paroi latérale du capteur de pression se trouve à une distance d2 de la paroi intérieure d'une des branches du joint femelle telle que:

$$0,1mm < d2 < 3mm$$

De cette façon, l'espace entre la nervure et le fond de la cavité est suffisamment grand pour permettre des défauts d'ajustement sans que les parois de la cavité appuient sur le capteur de pression, mais le capteur de pression pénètre suffisamment dans la cavité pour qu'un objet mince bloqué entre le joint mâle et le joint femelle soit contraint entre les branches de la partie femelle et entre le capteur de pression.

Suivant un mode de réalisation préférentiel de l'invention, l'ensemble de joints est remarquable en ce que :

- chaque branche de la partie femelle comporte un rebord intérieur en bordure de la cavité,

- lorsque l'ensemble de joints est en position fermée nominale, la distance entre l'extrémité de la nervure et une droite passant par les deux rebords intérieurs est supérieure à la moitié de la distance entre les deux rebords intérieurs.

De cette façon, les deux points d'inflexion de la chicane formée entre le joint mâle et le joint femelle se trouvent au niveau des deux rebords intérieurs et ils sont très marqués de manière à ce que l'objet mince appuie fortement sur le capteur de pression lorsqu'une tension est exercée sur lui.

Le rebord intérieur est formé entre la surface des branches qui fait face à la surface d'appui et les parois latérales des branches qui forment les parois intérieures de la cavité. Ce rebord intérieur est de préférence arrondi pour ne pas déchirer un objet mince coincé entre les joints mâle et femelle.

Avantageusement, le joint comporte des lèvres d'étanchéité flexibles fermant l'espace entre le joint mâle et le joint femelle.

Ces lèvres d'étanchéité permettent d'éviter le passage d'eau et de poussière entre les joints mâle et femelle.

Le joint mâle comporte de préférence une première lèvre d'étanchéité flexible agencée de façon à ce que:

- la première lèvre d'étanchéité fasse saillie de la surface d'appui;

- la première lèvre d'étanchéité vienne au contact d'une première des branches du joint femelle;

- la première lèvre d'étanchéité soit inclinée de façon à être dirigée en direction de la cavité;

Le joint femelle comporte de préférence une seconde lèvre d'étanchéité flexible agencée de façon à ce que:

- la seconde lèvre d'étanchéité fasse saillie de la deuxième des branches du joint femelle;

- la seconde lèvre d'étanchéité vienne au contact de la surface d'appui;

- la seconde lèvre d'étanchéité soit inclinée de façon à être dirigée en direction du capteur de pression.

Les lèvres de guidage s'arc-boutent vers l'espace compris entre les deux joints de façon à prévenir l'entrée d'eau ou de poussière entre les deux joints.

Avantageusement, la première branche du joint femelle comporte une surface qui fait face à la première lèvre d'étanchéité et qui est légèrement en pente en direction de la cavité. Par « légèrement en pente », on entend une pente comprise entre 3 et 35° par rapport à l'axe transversal.

De même, la surface d'appui qui fait face à la seconde lèvre d'étanchéité est de préférence légèrement en pente en direction de la base du capteur de pression.

Ainsi, dans les deux cas, les parties des joints qui reçoivent les lèvres d'étanchéité sont légèrement en pente afin de permettre le guidage de la lèvre vers l'espace compris entre le joint mâle et le joint femelle et de prévenir le retournement de la lèvre.

L'invention concerne également une porte comportant au moins un premier battant et un dormant ou un second battant et qui est pourvue d'un ensemble de joints tel que précédemment décrit, le joint mâle étant solidaire du premier battant, le joint femelle étant solidaire du dormant ou du deuxième battant.

Chaque joint, mâle et femelle, est de préférence rendu solidaire du battant de porte correspondant grâce à un système de clipsage.

L'invention est particulièrement adaptée aux portes de véhicules ferroviaires, comme les trains, tramway, métro.

**BREVE DESCRIPTION DES FIGURES**

D'autres caractéristiques et avantages de l'invention ressortiront à la lecture de la description qui suit, en référence aux figures annexées, qui illustrent :

- la figure 1, une vue en coupe d'un ensemble de joints selon un premier mode de réalisation de l'invention, l'ensemble de joints étant en position fermée nominale;
- la figure 2, une vue en coupe de l'ensemble de joints de la figure 1 dans une position fermée désaxée par rapport à la position nominale ;
- la figure 3, une vue en coupe du joint mâle de l'ensemble de joints de la figure 1 ;
- la figure 4, une vue en coupe du joint femelle de l'ensemble de joints de la figure 1 ;
- le figure 5, une vue en coupe de l'ensemble de joints de la figure 1 dans lequel est coincé un objet mince ;
- la figure 6 une vue en coupe d'un ensemble de joints selon un autre mode de réalisation de l'invention.

Pour plus de clarté, les éléments identiques ou similaires sont repérés par des signes de référence identiques sur l'ensemble des figures.

**DESCRIPTION DETAILLEE D'UN MODE DE REALISATION**

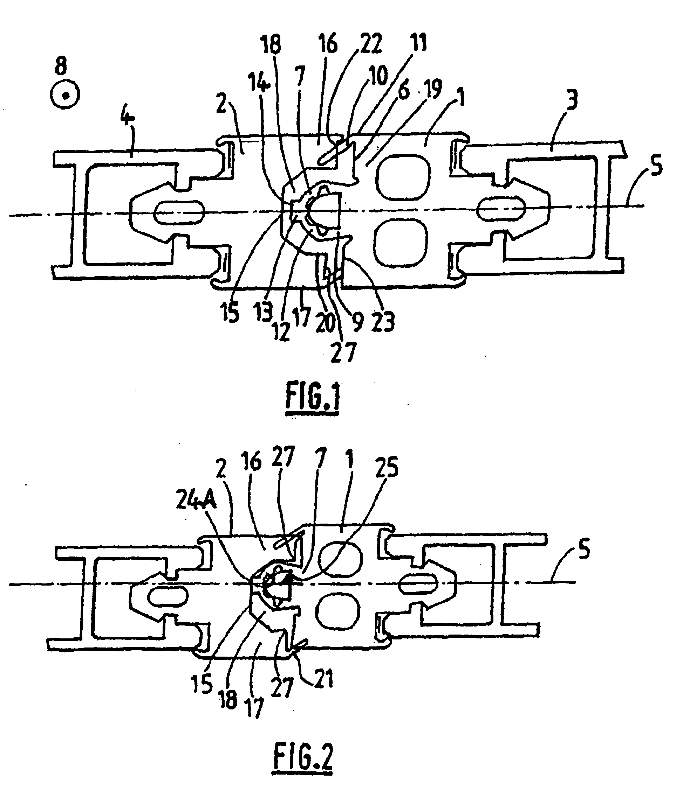

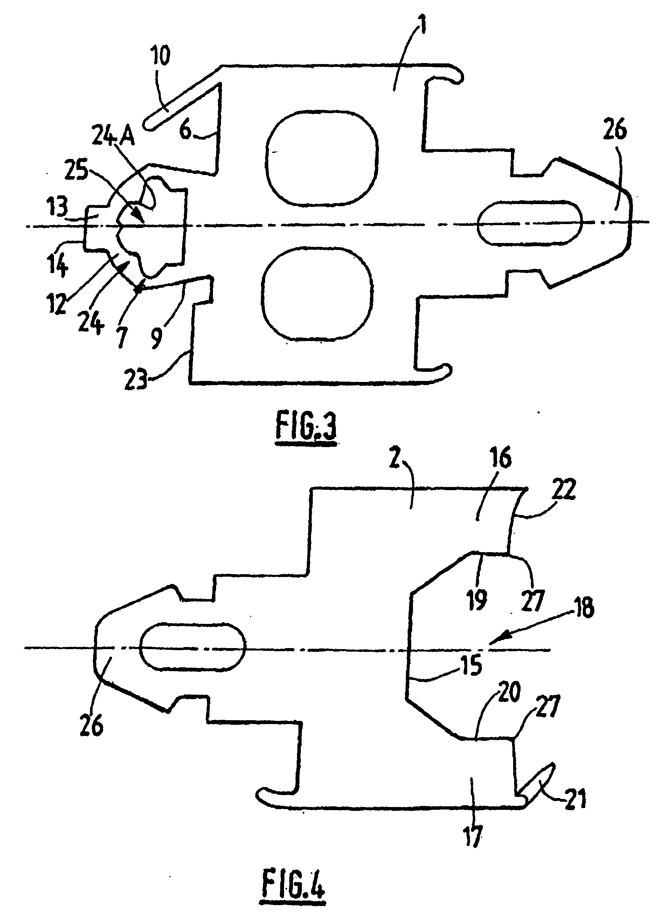

En référence aux figures 1 à 5, l'ensemble de joints selon l'invention comporte un joint mâle 1, représenté plus précisément sur la figure 3, et un joint femelle représenté plus précisément sur la figure 4. Le joint mâle 1 est solidaire d'un premier battant de porte 3 et le joint femelle 2 est solidaire d'un second battant de porte 4. Les battants de porte 3 et 4 sont aptes à se déplacer suivant un axe de translation 5 ou suivant une translation et un louvoiement, tout comme les joints mâle 1 et femelle 2 qui sont solidaires des battants de porte. Ainsi, l'ensemble de joints peut passer d'une position ouverte à une position fermée nominale représentée sur la figure 1. Dans la suite de la description on considérera que l'axe 5 est lié au joint mâle 1.

Les joints mâle et femelle s'étendent verticalement suivant l'axe 8. Dans la suite, l'adjectif « vertical » désignera une direction parallèle à cet axe 8 et le mot « hauteur » désignera une dimension suivant cet axe 8. Enfin, on appellera « transversale » la direction perpendiculaire à l'axe du translation 5 et à l'axe vertical 8.

Le joint mâle 1 comporte donc une surface d'appui 6 sensiblement perpendiculaire à l'axe de translation 5 et qui s'étend verticalement suivant l'axe 8. Le joint mâle comporte également un capteur de pression 7 faisant saillie de la surface d'appui 6 en direction du joint femelle 2, suivant l'axe de translation 5. La base 9 du capteur de pression 7 est positionnée au centre de la surface d'appui suivant la direction transversale. Le capteur de pression s'étend verticalement sur toute la hauteur du joint mâle. La base 9 du capteur de pression est évasée en direction du joint femelle.

Le capteur de pression comporte une paroi courbe 12 positionnée contre la base évasée. À l'extrémité de la paroi courbe 12 du capteur de pression, le capteur de pression est pourvu d'une nervure 13. Cette nervure 13 comporte une section rectangulaire de dimensions transversales moins importantes que la base 12 du capteur de pression 7. La nervure comporte une extrémité plane 14 qui fait face au joint femelle. La nervure 13 s'étend verticalement sur toute la hauteur du capteur de pression et donc du joint mâle.

Le joint mâle 1 comporte également une première lèvre d'étanchéité 10 positionnée à une extrémité 11 de la surface d'appui et qui s'étend également sur toute la hauteur du joint mâle.

Le joint femelle 2 s'étend verticalement sur toute la hauteur du battant de porte 4. Le joint femelle 2 comporte un fond plan 15 positionné face au capteur de pression. Une première branche 16 et une seconde branche 17 font saillie de ce fond plan 15 en direction du joint mâle 1. Le fond plan 15 et les deux branches 16 et 17 s'étendent verticalement sur toute la hauteur du battant de porte 4. Le fond plan 15 et les deux branches 16 et 17 délimitent une cavité 18 ouverte en direction du joint mâle 1. Le fond plan 15 comporte des dimensions transversales supérieures à celle de l'extrémité plane 14 de la nervure. Les parois intérieures 19 et 20 des branches 16 et 17 présentent une forme complémentaire de la base évasée 9 du capteur de pression. La deuxième branche 20 comporte à son extrémité une deuxième lèvre d'étanchéité 21.

Chaque branche 16 et 17 comporte un rebord intérieur 27 en bordure de la cavité.

La deuxième lèvre d'étanchéité 21 est inclinée en direction du capteur de pression 9, tandis que la première lèvre d'étanchéité 10 est inclinée en direction de la cavité du joint femelle. La première branche 19 comporte à son extrémité qui fait face à la première lèvre d'étanchéité 10 une surface 22. Cette surface 22 est inclinée par rapport à l'axe transversal d'un angle compris entre 3 et 35° en direction de la cavité. De même, la surface d'appui 23 qui fait face à la seconde lèvre d'étanchéité 21 est inclinée en direction de la base 9 du capteur de pression. Ces inclinaisons des lèvres d'étanchéité et des surfaces qui leur font face permettent le guidage des lèvres d'étanchéité afin que les lèvres d'étanchéité ne se retournent pas pendant la fermeture de l'ensemble de joints. Ces surfaces inclinées 22 et 23 permettent également de limiter les efforts de frottement des lèvres d'étanchéité sur les surfaces inclinées 22 et 23. En position fermée, les lèvres d'étanchéité 10 et 21 s'arc-boutent lors d'une pression extérieure et évite ainsi toute entrée d'eau ou de poussière.

L'ensemble de joints est de préférence constitué de caoutchouc, silicone ou EPDM, chaque joint étant extrudé.

La paroi courbe 12 et la nervure 13 forment une enveloppe en caoutchouc déformable 24 qui délimite une cavité fermée 25 équipée d'un ou plusieurs transducteurs.

Ces transducteurs peuvent être de différents types. L'ensemble de joints représenté sur les figures 1 et 2 comporte, dans la cavité 25, un transducteur fonctionnant grâce à la mise en contact d'éléments résistants. Ces éléments résistants sont situés sur la surface 24A de la cavité 25. Plus précisément, ils sont répartis sur la surface 24A de la cavité 25.

L'ensemble de joint de la figure 3 comporte un transducteur permettant de détecter des variations de pression dans la cavité 25. Plus précisément, lorsque la paroi courbe 12 se déforme, la pression dans la cavité 25 augmente et c'est cette variation de pression qui est détectée par le transducteur.

Cependant, tout autre type de transducteur peut être envisagé. On pourrait en particulier envisager des transducteurs fonctionnant grâce à la coupure d'un faisceau lumineux. Dans ce cas, le transducteur fonctionnerait grâce à un faisceau lumineux susceptible d'être interrompu par la paroi courbe 12 lorsque celle ci se déforme. On pourrait également envisager des transducteurs de réaliser un transducteur en recouvrant la surface 24A d'une couche superficielle conductrice dont la résistivité varie en fonction des déformations de la paroi courbe 12 ou par une couche superficielle magnétique induisant un champ magnétique variable en fonction des déformations de la paroi courbe 12, les variations de ce champ étant lues par un élément sensible disposé en regard sur une autre face de la cavité fermée 12A. Tout autre moyen approprié peut également être mis en oeuvre pour définir une cellule sensible à la déformation de l'enveloppe déformable 24.

Le joint mâle et le joint femelle comporte chacun un pied 26 pouvant se clipser dans un profil aluminium des battants de portes 3, 4.

Le joint mâle et le joint femelle sont agencés de manière à être alignés suivant l'axe de translation 5 lorsque l'ensemble de joints est en position fermée nominale, comme représenté sur la figure 1.

En référence à la figure 1, en position fermée nominale, le joint mâle et le joint femelle définissent entre eux un espace vide 28 en forme de Ω.

En effet, dans cette position fermée nominale, l'espace compris entre la surface d'appui 6 de la partie mâle et les branches 16 et 17 de la partie femelle forme les pieds du Ω, tandis que l'espace compris entre le capteur de pression et la cavité forme la tête du Ω. De cette manière, le capteur de pression pénètre profondément dans la cavité, sans toutefois toucher les parois de la cavité, ce qui permet un défaut d'ajustement de +/- 2 mm suivant l'axe de translation et de +/- 3 mm suivant l'axe transversal.

Grâce à cet espace vide 28 en forme de Ω, un objet mince 29 coincé entre le joint mâle 1 et le joint femelle 2 doit passer dans une double chicane avec deux points d'inflexion et donc par un double changement d'angle. Cette double chicane permet la détection d'un objet mince 29 lorsqu'une tension est exercée sur lui, et ce quelle que soit la direction de cette tension.

Afin d'avoir une détection optimale des objets minces, la distance entre l'extrémité de la nervure 14 et une droite passant par les deux rebords intérieurs 27 est au moins égale à la moitié de la distance entre les deux rebords intérieurs 27 lorsque l'ensemble de joints est en position fermée nominale. Cette forte pénétration du capteur de pression dans la cavité permet également de détecter des objets minces malgré des défauts d'ajustement de +/- 2 mm suivant l'axe de translation et de +/- 3 mm suivant l'axe transversal.

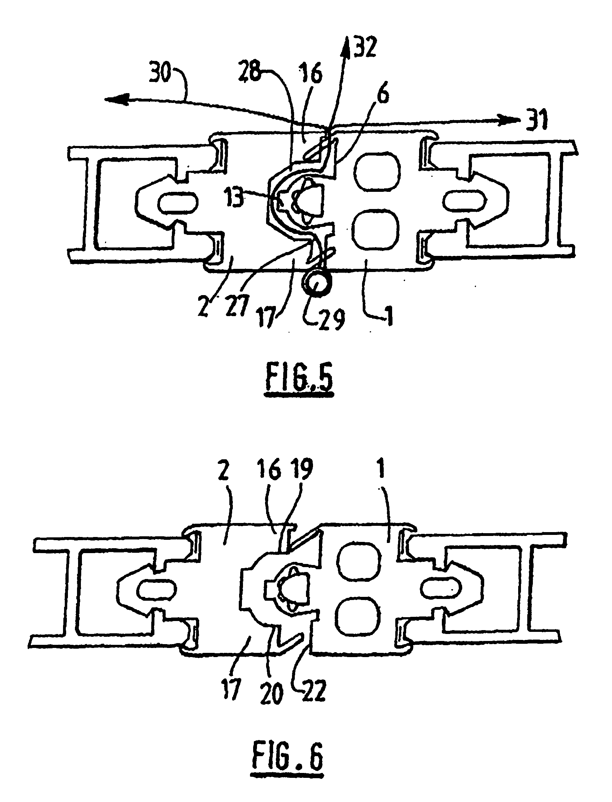

En effet, comme représenté sur la figure 5, lorsqu'une tension parallèle à l'axe de translation 30 est exercée sur l'objet mince, celui-ci prend appui sur les branches 16 et 17 qui sont relativement indéformable, ce qui provoque une compression par l'objet mince sur la nervure 13 suivant l'axe de translation.

Lorsqu'une tension parallèle à l'axe de translation 31 est exercée sur l'objet mince 29, il apparaît clairement sur la figure 5 que cela provoque une compression sur la nervure 13 du capteur de pression.

Lorsqu'une tension transversale 32 est exercée sur l'objet mince 29, l'objet mince prend appui sur les deux rebords intérieurs 27 pour exercer une pression sur la nervure 13 suivant l'axe de translation.

Ainsi, quelle que soit la direction de la tension exercée sur l'objet mince, celui-ci peut être détecté par le capteur de pression.

L'espace vide 28 entre le joint mâle et le joint femelle est suffisamment important pour éviter que les parois de la cavité appuient sur le capteur de pression en cas de défaut d'ajustement comme on peut le voir sur la figure 2.

La figure 6 représente un deuxième mode de réalisation de l'invention dans lequel les parois intérieures des branches ont des formes correspondantes aux parois du capteur de pression de façon à ce que le capteur de pression 7 puisse s'emboîter dans les branches en cas de défaut d'alignement.

De nombreuses variations sont possibles. L'invention est par exemple applicable à une paire de joints dont l'un est fixé à un battant et l'autre à un dormant.

## Revendications

**1.** Ensemble de joints pour une porte à au moins un battant (3, 4), l'ensemble de joints comportant un joint mâle (1) et un joint femelle (2), le joint mâle définissant un axe de translation, le joint mâle (1) et le joint femelle (2) étant aptes à être déplacés en translation l'un par rapport à l'autre suivant l'axe de translation (5) entre une position ouverte et une position fermée nominale, l'ensemble de joints étant tel que:

    - le joint mâle (1) comporte :

        - une surface d'appui (6),
        - un capteur de pression (7) faisant saillie de la surface d'appui (6) en direction du joint femelle (2), la surface d'appui (6) s'étendant de part et d'autre du capteur de pression,

    - le joint femelle (2) comporte:

        - un fond (15) disposé en regard du capteur de pression (7) du joint mâle,
        - deux branches (16, 17) disposées part et d'autre du fond (15) pour délimiter avec le fond une cavité (18) présentant une section en forme de U ouverte en direction du joint mâle,

l'ensemble de joint étant **caractérisé en ce que** le joint mâle et le joint femelle étant agencés de façon à ce que, en position fermée nominale:

        - les deux branches (16, 17) sont en contact avec la surface d'appui (6),
        - le capteur de pression (7) pénètre dans la cavité (18) sans qu'il y ait de contact entre le capteur de pression et les parois de la cavité et
        - la cavité (18) de la partie femelle est conformée pour délimiter, avec la surface d'appui (6) et le capteur de pression (7), un espace vide (28) présentant une section en forme de Ω.

**2.** Ensemble de joints selon la revendication précédente, **caractérisé en ce que** le capteur de pression (7) comporte une extrémité pourvue d'une nervure (13) faisant saillie de la paroi du capteur de pression en direction de la cavité du joint femelle.

3. Ensemble de joints selon la revendication précédente, **caractérisé en ce que** la nervure (13) comporte une extrémité plane (14).

4. Ensemble de joints selon la revendication précédente, **caractérisé en ce que** le fond (15) du joint femelle est plan et il est disposé face à l'extrémité plane (14) de la nervure (13) lorsque l'ensemble de joints est en position nominale fermée.

5. Ensemble de joints selon la revendication précédente, **caractérisé en ce que** l'ensemble de joints comporte un axe transversal perpendiculaire à l'axe de translation (5), le fond (15) plan présentant des dimensions suivant l'axe transversal au moins deux fois supérieures à celles de l'extrémité plane (14) de la nervure (13).

6. Ensemble de joints selon l'une quelconque des revendications 3 à 5, **caractérisé en ce que** la cavité (18) et le capteur de pression (7) sont dimensionnés de façon à ce que, lorsque l'ensemble de joints est en position fermée nominale, l'extrémité de la nervure (14) se trouve à une distance d1 du fond (15) de la cavité telle que:

$$0,5mm < d1 < 3mm$$

7. Ensemble de joints selon l'une quelconque des revendications 3 à 6, dans lequel le capteur de pression (7) comporte deux parois latérales (35), chaque paroi latérale (35) faisant face à une paroi intérieure (36) d'une des branches (16, 17) du joint femelle, l'ensemble de joints étant **caractérisé en ce que** la cavité (18) et le capteur de pression (7) sont dimensionnés de façon à ce que, lorsque l'ensemble de joints est en position fermée nominale, la paroi latérale (35) du capteur de pression se trouve à une distance d2 de la paroi intérieure (36) d'une des branches du joint femelle telle que:

$$0,1mm < d2 < 3mm$$

8. Ensemble de joints selon l'une quelconque des revendications 3 à 7, **caractérisé en ce que**:

   - chaque branche (16, 17) comporte un rebord intérieur (27) en bordure de la cavité (18),
   - lorsque l'ensemble de joints est en position fermée nominale, la distance entre l'extrémité de la nervure (14) et une droite passant par les deux rebords intérieurs (27) est supérieure à la moitié de la distance entre les deux rebords intérieurs (27).

9. Ensemble de joints selon l'une quelconques des revendications précédentes, **caractérisé en ce que** le joint comporte des lèvres d'étanchéité (10, 21) fermant l'espace vide (28) entre le joint mâle (1) et le joint femelle (2).

10. Ensemble de joints selon la revendication précédente, **caractérisé en ce que**:

    - le joint mâle comporte une première lèvre d'étanchéité (10) agencée de façon à ce que:

       - la première lèvre d'étanchéité (10) fasse saillie de la surface d'appui (6);
       - la première lèvre d'étanchéité (10) vienne au contact d'une première des branches (16) du joint femelle;
       - la première lèvre d'étanchéité (10) soit inclinée de façon à être dirigée en direction de la cavité (18);

    - le joint femelle comporte une seconde lèvre d'étanchéité (21) agencée de façon à ce que:

       - la seconde lèvre d'étanchéité (21) fasse saillie de la deuxième des branches (17) du joint femelle;
       - la seconde lèvre d'étanchéité (21) vienne au contact de la surface d'appui (6);
       - la seconde lèvre d'étanchéité (21) soit inclinée de façon à être dirigée en direction du capteur de pression (7).

11. Porte comportant au moins un premier (3) battant mobile par rapport à un dormant ou un second battant (4), **caractérisé en ce qu'**un ensemble de joints selon l'une quelconque des revendications précédentes est fixé à la porte, l'un des joints mâle ou femelle (1, 2) étant solidaire du premier battant (3), l'autre joint (2, 1) étant solidaire du dormant ou du second battant (4).

12. Véhicule ferroviaire comportant une caisse pourvue d'au moins une porte selon la revendication 11.

**Claims**

1. Assembly of gaskets for a door with at least one leaf (3, 4), said assembly of gaskets comprising a male gasket (1) and a female gasket (2), whereby the male gasket defines an axis of translation, and it being to move the male gasket (1) and the female gasket (2) are capable of move in a straight line in relation to each other along the axis of translation (5) between an open and a nominal closed position, the assembly of gaskets being such that:

- the male gasket (1) comprises:

- a bearing surface (6),
- a pressure sensor (7) projecting from the bearing surface (6) in the direction of the female gasket (2), the bearing surface (6) extending on either side of the pressure sensor,

- the female gasket (2) comprises:

- a base (15) disposed with regard to the pressure sensor (7) of the male gasket,
- two branches (16, 17) disposed on either side of the base (15) to delimit with the base a cavity (18) presenting a section in the shape of a U open in the direction of the male gasket, the assembly of gaskets being **characterised in that** the male gasket and the female gasket are disposed such that, in the nominal closed position:
- the two branches (16, 17) are in contact with the bearing surface (6),
- the pressure sensor (7) penetrates the cavity (18) without there being any contact between the pressure sensor and the cavity walls and
- the cavity (18) of the female part is shaped to delimit, with the bearing surface (6) and the pressure sensor (7), an empty space (28) presenting a section in the shape of a Ω.

2. Assembly of gaskets according two the previous claim, **characterised in that** the pressure sensor (7) has an extremity with a rib (13) projecting from the wall of the pressure sensor in the direction of the cavity of the female gasket.

3. Assembly of gaskets according to the previous claim, **characterised in that** the rib (13) has a flat extremity (14).

4. Assembly of gaskets according to the previous claim, **characterised in that** the base (15) of the female gasket is flat and it is disposed opposite the flat extremity (14) of the rib (13) when the assembly of gaskets is in nominal closed position.

5. Assembly of according to the previous claim, **characterised in that** the assembly of gaskets has a transversal axis perpendicular to the axis of movement (5), the flat base (15) having dimensions the transversal axis at least two times higher than those of the flat extremity (114) of the rib (13).

6. Assembly of gaskets according to one of the claims 3 to 5, **characterised in that** the cavity (18) and the pressure sensor (7) are designed such that, where the assembly of gaskets is in its nominal closed position, the extremity of the rib (14) is at a distance d1 from the base (15) of the cavity such that:

$$0.5mm < d1 < 3mm$$

7. Assembly of gaskets according to one of claim 3 to 6, in which the pressure sensor (7) has two side walls (35), each side wall (35) facing an internal wall (36) of one of the branches (16,17) of the female gasket, the assembly of gaskets being **characterised in that** the cavity (18) and the pressure sensor (7) are designed such that, where the assembly of gaskets is in nominal closed position, the side wall (35) of the pressure sensor is at a distance d2 from the internal wall (36) of one of the branches of the female gasket such that:

$$0.1mm < d2 < 3mm$$

8. Assembly of gaskets according to one of claims 3 to 7, **characterised in that**:

- each branch (16, 17) has an internal flange (27) along the cavity (18),
- where the assembly of gaskets is in nominal closed position, the distance between the extremity of the rib (14) and a straight line passing through the two internal flanges (27) is more than half the distance between the two internal flanges (27).

9. Assembly of gaskets according to one of the previous claims, **characterised in that** the gasket has sealing lips (10, 21) closing the empty space (28) between the male gasket (1) and the female gasket (2).

10. Assembly of gaskets according to the previous claim, **characterised in that**:

- the male gasket has a first sealing lip (10) disposed such that:
- the first sealing lip (10) projects from the bearing surface (6),
- the first sealing lip (10) comes into contact with the first of the branches (16) of the female gasket;
- the first sealing lip (10) is inclined such that it is oriented in the direction of the cavity (18);
- the female gasket has a second sealing lip (21) disposed such that:
- the second sealing lip (21) projects from the second of the branches (17) of the female gasket;
- the second sealing lip (21) comes into contact with the bearing surface (6);
- the second sealing lip (21) is inclined such that it is oriented in the direction of the pressure sensor (7).

11. Door comprising at least a first (3) leaf which can move in relation to a frame or a second leaf (4), **characterised in that** an assembly of gaskets according to one of the previous claims is fixed to the door, one of the male or female gaskets (1, 2) being an integral part of the first leaf (3), the other gasket (2, 1) being an integral part of the frame or the second leaf (4).

12. Railway vehicle having a body with at least one door according to claim 11.

**Patentansprüche**

1. Dichtungsanordnung für eine Tür mit mindestens einem Flügel (3, 4), wobei die Dichtungsanordnung ein Einschiebeteil (1) und ein Aufnahmeteil (2) aufweist, wobei das Einschiebeteil eine Translationsachse definiert, wobei das Einschiebeteil (1) und das Aufnahmeteil (2) relativ zueinander entlang der Translationsachse (5) zwischen einer geöffneten Position und einer nominalen geschlossenen Position translatorisch bewegt werden könnten, wobei die Dichtungsanordnung derart beschaffen ist, dass:

- das Einschiebeteil (1) umfasst:

  - eine Anlagefläche (6),
  - einen Drucksensor (7), der von der Anlagefläche (6) in Richtung des Aufnahmeteils (2) vorsteht, wobei die Anlagefläche (6) sich beiderseits des Drucksensors erstreckt,

- das Aufnahmeteil (2) umfasst:

  - einen Boden (15), der gegenüber dem Drucksensor (7) des Einschiebeteils angeordnet ist,
  - zwei Schenkel (16, 17), die beiderseits des Bodens (15) angeordnet sind, um mit dem Boden eine Vertiefung (18) zu begrenzen, die einen Querschnitt von der Form eines in Richtung des Einschiebeteils offenen "U" aufweist,

wobei die Dichtungsanordnung **dadurch gekennzeichnet ist, dass** das Einschiebeteil und das Aufnahmeteil so angeordnet sind, dass in der nominalen geschlossenen Position:

  - die zwei Schenkel (16, 17) sich in Kontakt mit der Anlagefläche (6) befinden,
  - der Drucksensor (7) in die Vertiefung (18) hineinragt, ohne dass ein Kontakt zwischen dem Drucksensor und den Wänden der Vertiefung vorhanden ist, und
  - die Vertiefung (18) des Aufnahmeteils dafür ausgebildet ist, mit der Anlagefläche (6) und dem Drucksensor (7) einen Hohlraum (28) zu begrenzen, der einen Querschnitt von der Form eines "Ω" aufweist.

2. Dichtungsanordnung nach dem vorhergehenden Anspruch, **dadurch gekennzeichnet, dass** der Drucksensor (7) ein Ende aufweist, das mit einer Rippe (13) versehen ist, die von der Wand des Drucksensors in Richtung der Vertiefung des Aufnahmeteils vorsteht.

3. Dichtungsanordnung nach dem vorhergehenden Anspruch, **dadurch gekennzeichnet, dass** die Rippe (13) ein ebenes Ende (14) aufweist.

4. Dichtungsanordnung nach dem vorhergehenden Anspruch, **dadurch gekennzeichnet, dass** der Boden (15) des Aufnahmeteils eben ist und gegenüber dem ebenen Ende (14) der Rippe (13) angeordnet ist, wenn sich die Dichtungsanordnung in der nominalen geschlossenen Position befindet.

5. Dichtungsanordnung nach dem vorhergehenden Anspruch, **dadurch gekennzeichnet, dass** die Dichtungsanordnung eine Querachse umfasst, die zu der Translationsachse (5) senkrecht ist, wobei der ebene Boden (15) Abmessungen in Richtung der Querachse aufweist, die mindestens doppelt so groß sind wie diejenigen des ebenen Endes (14) der Rippe (13).

6. Dichtungsanordnung nach einem der Ansprüche 3 bis 5, **dadurch gekennzeichnet, dass** die Vertiefung (18) und der Drucksensor (7) so dimensioniert sind, dass, wenn sich die Dichtungsanordnung in der nominalen geschlossenen Position befindet, das Ende (14) der Rippe sich in einem solchen Abstand d1 von dem Boden (15) der Vertiefung befindet, dass gilt:

$$0,5 \text{ mm} < d1 < 3 \text{ mm}.$$

7. Dichtungsanordnung nach einem der Ansprüche 3 bis 6, wobei der Drucksensor (7) zwei Seitenwände (35) aufweist, wobei jede Seitenwand (35) einer Innenwand (36) eines der Schenkel (16, 17) des Aufnahmeteils zugewandt ist, wobei die Dichtungsanordnung **dadurch gekennzeichnet ist, dass** die Vertiefung (18) und der Drucksensor (7) so dimensioniert sind, dass, wenn sich die Dichtungsanordnung in der nominalen geschlossenen Position befindet, die Seitenwand (35) des Drucksensors sich in einem solchen Abstand d2 von der Innenwand (36) eines der Schenkel des Aufnahmeteils befindet, dass gilt:

$$0,1 \text{ mm} < d2 < 3 \text{ mm}.$$

8. Dichtungsanordnung nach einem der Ansprüche 3 bis 7, **dadurch gekennzeichnet, dass**:

   - jeder Schenkel (16, 17) eine Innenkante (27) aufweist, die an die Vertiefung (18) angrenzt,
   - wenn sich die Dichtungsanordnung in der nominalen geschlossenen Position befindet, der Abstand zwischen dem Ende (14) der Rippe und einer Geraden, die durch die beiden Innenkanten (27) verläuft, größer als die Hälfte des Abstands zwischen den beiden Innenkanten (27) ist.

9. Dichtungsanordnung nach einem der vorhergehenden Ansprüche, **dadurch gekennzeichnet, dass** die Dichtung Dichtlippen (10, 21) aufweist, die den Hohlraum (28) zwischen dem Einschiebeteil (1) und dem Aufnahmeteil (2) verschließen.

10. Dichtungsanordnung nach dem vorhergehenden Anspruch, **dadurch gekennzeichnet, dass**:

    - das Einschiebeteil eine erste Dichtlippe (10) aufweist, die derart ausgebildet ist, dass:

      - die erste Dichtlippe (10) von der Anlagefläche (6) vorsteht;
      - die erste Dichtlippe (10) mit einem ersten der Schenkel (16) des Aufnahmeteils in Kontakt kommt;
      - die erste Dichtlippe (10) so geneigt ist, dass sie in Richtung der Vertiefung (18) gelenkt wird;

    - das Aufnahmeteil eine zweite Dichtlippe (21) aufweist, die derart ausgebildet ist, dass:

      - die zweite Dichtlippe (21) von dem zweiten der Schenkel (17) des Aufnahmeteils vorsteht;
      - die zweite Dichtlippe (21) mit der Anlagefläche (6) in Kontakt kommt;
      - die zweite Dichtlippe (21) so geneigt ist, dass sie in Richtung des Drucksensors (7) gelenkt wird.

11. Tür, die mindestens einen ersten (3) Flügel aufweist, der bezüglich einer Einfassung oder eines zweiten Flügels (4) beweglich ist, **dadurch gekennzeichnet, dass** eine Dichtungsanordnung nach einem der vorhergehenden Ansprüche an der Tür befestigt ist, wobei das Einschiebeteil oder das Aufnahmeteil (1, 2) mit dem ersten Flügel (3) fest verbunden ist und das andere von diesen Teilen (2, 1) mit der Einfassung oder dem zweiten Flügel (4) fest verbunden ist.

12. Schienenfahrzeug, das einen Wagenkasten aufweist, der mit mindestens einer Tür nach Anspruch 11 versehen ist.

FIG.1

FIG.2

**FIG.3**

**FIG.4**

FIG.5

FIG.6

**EP 2 243 678 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006087131 A
- CH 688354